Europäisches Patentamt

European Patent Office

Office européen des brevets

(19)

(11) Veröffentlichungsnummer: **0 003 564**
**B1**

(12) **EUROPÄISCHE PATENTSCHRIFT**

(45) Veröffentlichungstag der Patentschrift: 07.04.82

(51) Int. Cl.³: **C 01 B 6/04**

(21) Anmeldenummer: **79100296.7**

(22) Anmeldetag: **01.02.79**

(54) Verfahren zur Herstellung von Magnesiumhydriden.

(30) Priorität: **02.02.78 DE 2804445**

(43) Veröffentlichungstag der Anmeldung:
**22.08.79 Patentblatt 79/17**

(45) Bekanntmachung des Hinweises auf die Patenterteilung:
**07.04.82 Patentblatt 82/14**

(84) Benannte Vertragsstaaten:
**BE CH DE FR GB IT LU NL SE**

(56) Entgegenhaltungen:
**AT - B - 273 889**
**DE - A - 1 809 264**
**GB - A - 905 985**
**US - A - 3 138 433**
**US - A - 3 383 186**
**US - A - 3 485 585**
**US - A - 3 617 218**
**Chemical Abstracts vol. 85, December 1976,**
**Columbus, Ohio, USA**
**JEZOWSKA et al "Catalytic synthesis of**
**magnesium hydride" Seite 151, linke Spalte,**
**Abstract Nr. 180 094v**
(73) Patentinhaber: **Studiengesellschaft Kohle mbH**
**Kaiser-Wilhelm-Platz 1**
**D-4330 Mülheim/Ruhr (DE)**

(72) Erfinder: **Bogdanovic, Borislav, Prof. Dr. Dipl.-**
**Chem.**
**Kaiser-Wilhelm-Platz 1**
**D-4330 Mülheim-Ruhr (DE)**

(74) Vertreter: **von Kreisler, Alek, Dipl.-Chem. et al,**
**Deichmannhaus am Hauptbahnhof**
**D-5000 Köln 1 (DE)**

Courier Press, Leamington Spa, England.

# 0 003 564

Verfahren zur Herstellung von Magnesiumhydriden

Die Erfindung betrifft ein katalytisches Verfahren zur Herstellung von Magnesiumhydriden unter milden Bedingungen. Für die Herstellung des Magnesiumhydrids nach den bisher bekannten Methoden sind im allgemeinen hohe Reaktionstemperaturen und -drucke notwendig: 175°C/5 Bar (in Gegenwart von Allyljodid bzw. Jod, J. P. Faust et al., J. Appl. Chem. (London) $10$, 187 (1960)); 140—170°C/135 Bar (in Gegenwart von AlEt$_3$, M. Mamula et al., CS-A 139.589 (1966), C.A. $76$, 87972 (1972)); 150°C/200 Bar (J. C. Snyder, U.S.A. 3.485.585 (1964), C.A. $72$, 45603 (1970); TiCl$_3$ als Katalysator, J. C. Snyder U.S.A. 3.387.948 (1962), C.A. $69$, 44943 (1968)); 350°C/24 Bar (J. J. Reilly und R. H. Wiswall, Inorg. Chem., 2254, $1968$); 380—450°C/100—200 Bar (T. N. Dymova et al. Zhur. Neorg. Khim. $6$, 763 (1961), C. A. $55$ 23144 (1961)).

Die Bildung von MgH$_2$ aus Magnesium und H$_2$ in Gegenwart von VCl$_4$ als Katalysator in Tetrahydrofuran (THF) bei 20°C/1 Bar beschreiben B. Jezowaska-Trzebiatowska et al. (Bull. Acad. Pol. Sci., Ser. Sci. Chim. $1976$, 24 (4), 331; C.A. $85$, 180094 (1976). Die katalytische Aktivität dieses Systems sinkt jedoch bereits nach wenigen katalytischen Schritten so stark ab, daß eine technische Herstellung von MgH$_2$ auf diesem Wege nicht infrage kommt. Die in THF löslichen Hydridmagnesiumhalogenide waren bisher nach E. C. Ashby and A. B. Goel (J. Amer. Chem. Soc. $99$, 310 (1977)) nur durch Umsetzung von einem aus Dialkyl- oder Diarylmagnesium und LiAlH$_4$ gewonnenen Magnesiumhydrid mit Magnesiumhalogeniden herstellbar.

In der U.S.A. 3.617.218 wird die Herstellung von Alkalimetallhydriden aus den Metallen und Wasserstoff in Gegenwarf von z.B. Naphthalin und Titantetraisopropylat beansprucht, jedoch ist in dieser Patentschrift nur die Herstellung von Natriumhydrid durch Beispiele belegt. Dies ist auch in der nach der Einreichung der genannten U.S.-Patentschrift erfolgten Publikation J. Am. Chem. Soc. 90, 6854 (1968) der Fall, d.h. auch diese Publikation, genau wie die Ansprüche des U.S.-Patents, sind auf Alkalimetallhydride beschränkt. In Sp. 2 der U.S.A. 3.617.218 werden anstelle von Natriumandere Alkalimetalle und auch Erdalkalimetalle, z.B. Magnesium erwähnt. Anstelle von Naphthalin können andere polycyclische aromatische Kohlenwasserstoffe, z.B. Anthracen, verwendet werden. Es hat sich jedoch herausgestellt und wurde durch Versuche der Anmelderin bewiesen, daß die in der U.S.A. 3.617.218 empfohlenen Katalysatoren für die Hydrierung von Erdalkalimetallen und Aluminium unbrauchbar sind. Die Kombination von Magnesium, Naphthalin und z.B. Titantetraisopropoxid (s. Beispiele 1—3 der U.S.A. 3.617.218) funktioniert nicht, was bedeutet, daß unter den angegebenen Bedingungen kein Hydride gebildet wird. Auch andere Übergangsmetallverbindungen anstelle von Titantetraisopropoxid funktionieren nicht. Weiter funktioniert die Kombination Aluminium+Anthracen+Übergangsmetallverbindung ebenfalls nicht, da unter diesen Bedingungen Aluminiumhydrid nicht gebildet wird. Daraus folgt, daß das in der U.S.A. 3.617.218 beschriebene allgemeine Prinzip nicht funktioniert.

Zur Herstellung des Magnesiumhydrids nach dem erfindungsgemäßen Verfahren wird metallisches Magnesium in Gegenwart eines Katalysators sowie gegebenenfalls eines Aktivators $A$ mit Wasserstoff umgesetzt; zur Herstellung der löslichen Hydridmagnesiumhalogenide werden zusätzlich wasserfreie Magnesiumhalogenide dem Reaktionsmedium zugesetzt. Die Umsetzung wird im allgemeinen in einem Lösungsmittel, das gleichzeitig als Aktivator dienen kann, durchgeführt. Als bevorzugtes Lösungsmittel wird Tetrahydrofuran verwendet.

Als Katalysatoren dienen Kombinationen aus einem Halogenid Verbindung eines Metalls der IV. bis VIII. Nebengruppe und einer magnesiumorganischen Verbindung bzw. eines Magnesiumhydrids.

Bevorzugte Übergangsmetallverbindungen sind Chrom-, Eisen und Titanhalogenide und die bevorzugten magnesiumorganischen Verbindungen sind Magnesiumanthracen und Verbindungen aus Magnesium und Butadien.

Als Aktivatoren werden polycyclische Aromaten wie z.B. Naphthalin, Tetracen, Pentacen, Phenanthren, Perylen und insbesondere Anthracen, und tertiäre Amine NR$_3$ mit R=Alkyl-, Cycloalkyl- oder Arylgruppen wie z.B. Triäthylamine oder Tributylamin oder Pyridine eingesetzt.

Erfindungsgemäß können die Katalysatoren im Verhältnis Mg:Übergangsmetall von 10$^4$ bis 10:1 eingesetzt werden, wobei das Verhältnis Übergangsmetall:M—C bzw. M—H von 0,1:1 bis 10:1 gewählt werden kann. Man arbeitet bei Temperaturen von 0 bis 200°C, bevorzugt jedoch von 20 bis 100°C, sowie bei Drucken von 1 bis 300 Bar.

Das erfindungsgemäße Verfahren ermöglicht erstmals eine technische Herstellung von hochreaktionsfähigem Magnesiumhydrid bzw. von löslichen Hydridmagnesiumhalogeniden aus Magnesium und Wasserstoff unter milden Bedingungen auf katalytischem Wege. Das Magnesiumhydrid besitzt große Bedeutung als Wasserstoffspeicher, da es 7.66 Gew.% Wasserstoff enthält, der bei erhöhten Temperaturen unter Rückbildung von elementarem Magnesium abgespalten werden kann (s. D. L. Cummings und G. J. Powers, Ind. Eng. Chem., Process Des. Develop. $13$, 182 (1974)).

Das nach dem erfindungsgemässen Verfahren hergestellte Magnesiumhydrid ist in seiner Funktion als Wasserstoffspeicher Magnesiumhydriden, die nach bisher bekannten Methoden hergestellt wurden, überlegen (vgl. M. H. Mintz et al, J. Inorg. Nucl. Chem. 40, 765 (1978). So wurde z.B. eine Probe (15,8 g) des unter Verwendung von CrCl$_3$ als Katalysatorkomponente bei 20°C

O 003 564

hergestellten Magnesiumhydrids bei 300 bis 315°C und 1,3 mbar—1 Torr innerhalb von 40 Minuten quantitativ dehydriert (Aogabe von 11,5 1 $H_2$ von 1 Bar und 20°C). Das auf diese Weise erhaltene hochaktive Magnesiumpulver reagient bei 290 bis 310°C und 50 Bar erneut mit Wasserstoff, wobei innerhalb von 30 Minuten die Bildung von Magnesiumhydrid praktisch beendet ist (Aufnahme von 11,5 1 $H_2$ von 1 Bar und 20°C). Der Vorgang der Hydrierung/Dehydrierung kann mehrmals wiederholt werden, ohne daß dabei erhebliche Veränderungen in der Geschwindigkeit oder in der $H_2$-Speicherkapazität auftreten.

Darüber hinaus können Magnesiumhydrid bzw. die löslichen Hydridmagnesiumhalogenide anstelle des teuren $LiAlH_4$ als Reduktionsmittel verwendet werden.

Beispiel 1

Eine Suspension von 97.2 g (4.0 Mol) Magnesiumpulver 0,297 mm (50 mesh) in 400 ml abs. THF wird mit 1,0 ml Äthylbromid und nach halbstündigem Ruhren mit 8.0 g (45 mMol) Anthracen versetzt. Nach 3-stündigem Rühren des Gemisches (Bildung des Magnesiumanthracens) werden 7.0 g (44 mMol) $CrCl_3$ zugegeben und danach weitere 25—30 Min. gerührt. Die olivgrüne Suspension wird darauf in einem 2 l Rührautoklav bei 52°C und einem Anfangsdruck von 135 Bar Wasserstoff hydriert. Nach 5 Stdn. Reaktionszeit beträgt der Wasserstoffdruck 92 Bar, nach 8 Stdn. 82 Bar und nach einer Gesamtreaktionszeit von 20 Stdn. bleibt der Druck bei 72 Bar konstant. Der Druckabfall entspricht einer Aufnahme von 100 l Wasserstoff bzw. einer quantitative Umsetzung von Mg zu $MgH_2$. Das Magnesiumhydrid kann durch Filtration der gewonnenen Suspension von der Katalysatorlösung getrennt und durch Waschen mit THF und Pentan bzw. Trocknen im Vakuum in fester, pyrophorer Form erhalten werden. Ausbeute: quantitativ.

Beispiel 2

97.2 g (4.0 Mol) Magnesiumpulver in 250 ml abs. THF werden in einem 2 L Rührautoklav vorgelegt und durch Zugabe von 0.4 g Jod aktiviert. Eine Suspension von 3.8 g (19 mMol) Magnesiumanthracen und 0.5 g (20 mMol) Magnesiumpulver in 180 ml THF wird mit einer Lösung von 3.0 g (17.5 mMol) $FeCl_3$ in 20 ml THF versetzt, die Mischung 20 Min. gerührt und zu dem Autoklavinhalt gegeben. Der Ansatz wird bei 52°C und einem Anfangsdruck von 120 Bar Wasserstoff hydriert. Nach 24 Stdn. Reaktionszeit beträgt der Wasserstoffdruck 80 Bar und nach 48 Stdn. bleibt der Wasserstoffdruck bei 62 Bar konstant. Der Druckabfall entspricht einer Gesamtaufnahme von 4.3 Mol $H_2$ bzw. eine vollständigen Umsetzung des Mg zu $MgH_2$.

Beispiele 3—10

Eines Suspension von 4.86 g (0.2 Mol) Magnesiumpulver 0,297 mm (50 mesh) in 50 ml abs. THF wird mit 0.05 ml Äthylbromid und nach halbstündigem Rühren mit 0.36 g (2.0 mMol) Anthracen versetzt. Nach 3-stündigem Rühren des Ansatzes (in dieser Zeit bildet sich Magnesiumanthracen, wie durch Ausscheidung des orangen Niederschlags zu erkennen ist) werden zur Suspension 2.0 mMol der jeweiligen Übergangsmetallverbindungen (s. Tabelle) gegeben und weitere 15—20 Min. gerührt. Das Reaktionsgefäß wird bei Normaldruck mit Wasserstoff gefült und die Wasserstoffaufnahme bei 20°C unter kräftigem Rühren mit Hilfe einer Gasbürette gemessen. Die Wasserstoffaufnahmen verlaufen während mehrerer Tage mit nahezu konstanter Geschwindigkeit. Die Angaben über die nach 48 Stdn. aufgenommen $H_2$-Mengen bzw. % Umsatz zu $MgH_2$ sind in der Tabelle angegeben:

| Beispiel | 3 | 4 | 5 | 6 | 7 | 8 | 9 | 10 |
|---|---|---|---|---|---|---|---|---|
| Übergangsmetall-Verb. | $CrCl_3$ | $FeCl_3$ | $TiCl_4$ | $VCl_4$ | $MoCl_5$ | $MnCl_2$ | $CoCl_2$ | $NiCl_2$ |
| g (2.0 mMol) | 0.32 | 0.32 | 0.38 | 0.39 | 0.56 | 0.25 | 0.26 | 0.26 |
| $H_2$-Aufnahme nach 48 Stdn. (ml) | 2000 | 1500 | 1300 | 500 | 700 | 950 | 250 | 200 |
| % Umsatz zu $MgH_2$ nach 48 Stdn. | 42 | 31 | 27 | 10 | 15 | 20 | 5 | 4 |

Beispiele 11—14

Die Beispiele 11—14 werden analog dem Beispiel 4 durchgeführt, dabei wird das Molverhältnis $FeCl_3$:Mg-Anthracen von 1:0.5 bis 1:10 variiert. Die Wert für die nach 48 Stdn. aufgenommenen $H_2$-Mengen bzw. % Umsatz zu $MgH_2$ gibt folgende Tabelle wieder:

3

# 0 003 564

| Beispiel | 11 | 4 | 12 | 13 | 14 |
|---|---|---|---|---|---|
| $FeCl_3$ g (mMol) | 0.32 (2.0) | 0.32 | 0.32 | 0.32 | 0.32 |
| Anthracen g (mMol) | 0.18 (1.0) | 0.36 (2.0) | 0.71 (4.0) | 1.42 (8.0) | 3.6 (20.0) |
| $H_2$-Aufnahme nach 48 Stdn. (ml) | 850 | 1.500 | 850 | 900 | 1.300 |
| % Umsatz zu $MgH_2$ nach 48 Stdn. | 18 | 31 | 18 | 19 | 27 |

### Beispiele 15—17

Die Beisp. 15—17 werden analog dem Beisp. 4, d.h. mit Mg und Anthracen durchgeführt, dabei werden die Ansätze vor dem Einleiten des Wasserstoffs mit 10 mMol eines Amins (s. Tabelle) versetzt. Die Werte für die nach 48 Std. aufgenommenen $H_2$-Mengen bzw. % Umsatz zu $MgH_2$ enthält die folgende Tabelle:

| Beispiel | 15 | 16 | 17 |
|---|---|---|---|
| Amin | $(C_2H_5)_3N$ | $(CH_3)_2NCH_2CH_2N(CH_3)_2$ | (Piperazin-Ring) N—N |
| g (mMol) | 1.01 (10.0) | 1.16 (10.0) | 1.12 (10.0) |
| $H_2$-Aufnahme nach 48 Stdn. (ml) | 2.000 | 1.100 | 700 |
| % Umsatz zu $MgH_2$ nach 48 Stdn. | 42 | 23 | 15 |

### Beispiel 18

Der Versuch wird analog dem Beispiel 4 durchgeführt, wobei eine Mischung von 40 ml Toluol und 10 ml Tetrahydrofuran als Lösungsmittel verwendet wurde. Die Wasserstoffaufnahme nach 48 Stdn. beträgt 500 ml.

### Beispiel 19

Der Versuch wird analog dem Beispiel 4 durchgeführt, wobei anstelle von Tetrahydrofuran 1,2-Dimethoxyäthan (50 ml) als Lösungsmittel verwendet wird. Die Wasserstoffaufnahme nach 48 Stdn. beträgt 220 ml.

### Beispiel 20

Eine Suspension von 0.60 g (25 mMol) Magnesiumpulver in 10 ml abs. THF wird mit 0.02 ml Äthylbromid und nach halbstündigem Rühren mit 0.06 g (0.37 mMol) Anthracen versetzt. Nach 3-stündigem Rühren gibt man zur Suspension 0.06 g (0.37 mMol) $CrCl_3$ und nach weiteren 15 Min. eine Lösung von 4.9 g (27 mMol) $MgBr_2$ (wasserfrei) in 120 ml THF. Die Mischung wird in einem mit Glaseinsatz ausgestattete 500 ml Rührautoklav 12 Stdn. bei 15°C und 100 Bar Wasserstoff hydriert. Man läßt die Suspension 20 Stdn. sedimentieren. 25.0 ml (von insgesamt 130 ml) der klaren überstehenden Lösung liefert bei der Deuterolyse 140 ml HD; die Lösung enthält außerdem insgesamt 1.15 g (47.4 mMol) Mg und 4.28 g (53.6 mgAtom) Br. Diese Zusammensetzung entspricht einer Ausbeute an löslichem HMgBr (im Gemisch mit $MgBr_2$) von ca. 60%.

### Beispiel 21

97.0 g (4.0 Mol) Magnesiumpulver in 370 ml abs. THF werden in einem 2 l Rührautoklav vorgelegt und durch Zugabe von 1.0 ml Äthylbromid aktiviert. In die Suspension werden 2 l (83 mMol) gasförmiges Butadien eingeleitet und der Autoklavinhalt 1.5 Stdn. auf 80°C erhitzt (Bildung einer

4

magnesiumorganischen Verbindung). Nach Abkülung auf Raumtemperatur werden zum Autoklaveninhalt 3.2 g (19 mMol) FeCl₃ in 30 ml THF gegeben. Der Ansatz wird bei 20—22°C und einem Anfangsdruck von 120 Bar Wasserstoff hydriert. Nach 20 Stdn. Reaktionszeit fällt der Wasserstoffdruck auf 97 Bar und nach 44 Stdn. bleibt der Druck bei 92 Bar konstant. Der Druckabfall entspricht einer Gesamtaufnahme von 2 Mol H₂ bzw. einem Umsatz von Mg zu MgH₂ von ca. 50%.

## Ansprüche

1. Verfahren zur Herstellung von Hydriden des Magnesiums mit Hilfe von Wasserstoff und Übergangsmetallen als Katalysatoren, dadurch gekennzeichnet, daß man Magnesium in Gegenwart eines Katalysators, bestehend aus einem Halogenid eines Metalls der IV. bis VIII. Nebengruppe des periodischen Systems und einer magnesiumorganischen Verbindung bzw. eines Magnesiumhydrids sowie gegebenenfalls in Gegenwart eines polycyclischen Aromaten oder eines tertiären Amins sowie gegebenenfalls in Gegenwart eines Magnesiumhalogenids MgX₂ mit X=Cl, Br, J mit Wasserstoff umsetzt.

2. Verfahren nach Anspruch 1, dadurch gekennzeichnet, daß die Umsetzung in Gegenwart eines Lösungsmittels bevorzugt in Tetrahydrofuran durchgeführt wird.

3. Verfahren nach Anspruch 1 und 2, dadurch gekennzeichnet, daß bei Drucken von 1 bis 300 Bar gearbeitet wird.

4. Verfahren nach Ansprüchen 1—3, dadurch gekennzeichnet, daß bei Temperaturen von 0 bis 200°C gearbeitet wird.

5. Verfahren nach Ansprüchen 1—4, dadurch gekennzeichnet, daß Verhältnis Mg:Übergangsmetall wie 10⁴ bis 10:1 gewählt wird.

6. Verfahren nach Ansprüchen 1—5, dadurch gekennzeichnet, daß das Verhältnis Übergangsmetall:magnesiumorganischer Verbindung bzw. Magnesiumhydrid wie 0,1:1 bis 10:1 gewählt wird.

7. Verfahren nach Ansprüchen 1—6, dadurch gekennzeichnet, daß als Ubergangsmetallhalogenide Chrom-, Titan- bzw. Eisenhalogenide eingesetzt werden.

8. Verfahren nach Ansprüchen 1—6, dadurch gekennzeichnet, daß als magnesiumorganische Verbindungen Magnesiumanthracen verwendet wird.

9. Verfahren nach Ansprüchen 1—8, dadurch gekennzeichnet, daß als polycyclische Aromaten Anthracen, Tetracen bzw. Benzanthracen eingesetzt werden.

10. Verfahren nach Ansprüchen 1—9, dadurch gekennzeichnet, daß als tertiäre Amine NR₃ solche mit R=Alkyl oder Cycloalkylgruppen eingesetzt werden.

11. Verfahren nach Ansprüchen 1—10, dadurch gekennzeichnet, daß gegebenenfalls bei der Umsetzung des Magnesiums dessen Halogenide MgX₂ mit X=Cl, Br, J im Verhältnis Mg:MgX₂=1:1 zugesetzt werden.

## Claims

1. A process for the production of hydrides of magnesium by means of hydrogen and transition metals as catalysts, characterized in that magnesium is reacted with hydrogen in the presence of a catalyst consisting of a halide of a metal of the fourth to eighth subgroup of the periodic system and an organomagnesium compound and/or a magnesium hydride, respectively, and optionally in the presence of a polycyclic aromatic compound or a tertiary amine, and optionally in the presence of a magnesium halide MgX₂, wherein X=Cl, Br, I.

2. A process according to claim 1, characterized in that the reaction is carried out in the presence of a solvent, preferably in tetrahydrofuran.

3. A process according to claims 1 and 2, characterized in that the reaction is carried out under a pressure from 1 to 300 bar.

4. A process according to claims 1 to 3, characterized in that the reaction is carried out at a temperature from 0°C to 200°C.

5. A process according to claims 1 to 4, characterized in that the ratio of Mg:transition metal is chosen from 10⁴ to 10:1.

6. A process according to claims 1 to 5, characterized in that the ratio of transition metal:organomagnesium compound and/or magnesium hydride, respective, is chosen from 0.1:1 to 10:1.

7. A process according to claims 1 to 6, characterized in that halides of chromium, titanium, and/or iron, respectively, are used as the transition metal halides.

8. A process according to claims 1 to 6, characterized in that magnesium anthracene is used as the organomagnesium compound.

9. A process according to claims 1 to 8, characterized in that anthracene, tetracene, and/or benzanthracene, respectively, are used as the polycyclic aromatic compounds.

10. A process according to claims 1 to 9, characterized in that the tertiary amines NR₃, wherein R=alkyl or cycloalkyl groups, are used as the tertiary amines.

# 0 003 564

11. A process according to claims 1 to 10, characterized in that in the reaction of the magnesium its halides $MgX_2$, wherein X=Cl, Br, I, are optionally added in the ratio of $Mg:MgX_2=1:1$.

## Revendications

1. Procédé pour la préparation d'hydrures du magnésium avec l'aide d'hydrogène et de métaux de transition comme catalyseurs, caractérisé en ce qu'on fait réagir le magnésium avec de l'hydrogène en présence d'un catalyseur, composé d'un halogènure d'un métal du groupe IV à VIII de la classification périodique et d'un composé organomagnésien ou d'un hydrure de magnésium, ainsi qu'éventuellement en présence d'un composé aromatique polycyclique ou d'une amine tertiaire, ainsi qu'éventuellement en présence d'un halogénure de magnésium $MgX_2$ avec X=Cl, Br, I.

2. Procédé selon la revendication 1, caractérisé en ce qu'on effectue la réaction en présence d'un solvant, de préférence dans du tétrahydrofuranne.

3. Procédé selon l'une des revendications 1 ou 2, caractérisé en ce qu'on opère à des pressions de I à 300 bars.

4. Procédé selon l'une quelconque des revendications 1 à 3, caractérisé en ce qu'on opère à des températures de 0 à 200°C.

5. Procédé selon l'une quelconque des revendications 1 à 4, caractérisé en ce qu'on choisit le rapport Mg:métal de transition comme étant de $10^4$ à 10:1.

6. Procédé selon l'une quelconque des revendications 1 à 5, caractérisé en ce qu'on choisit le rapport métal de transition:composé organométallique ou hydrure de magnésium comme étant de 0,1:1 à 10:1.

7. Procédé selon l'une quelconque des revendications 1 à 6, caractérisé en ce qu'on utilise comme halogénure de métal de transition des halogénures de chrome, de titane out de fer.

8. Procédé selon l'une quelconque des revendications 1 à 7, caractérisé en ce qu'on utilise comme composés organomagnésiens de l'anthracène-magnesium.

9. Procédé selon l'une quelconque des revendications 1 à 8, caractérisé en ce qu'on utilise comme aromates polycycliques de l'anthracène, du tétracène au du benzanthracène.

10. Procédé selon l'une quelconque des revendications 1 à 9, caractérisé en ce qu'on utilise comme amine tertiaire $NR_3$ de tels composés ayant des groupes R=alkyle ou cycloalkyle.

11. Procédé selon l'une quelconque des revendications 1 à 10, caractérisé en ce qu'on ajoute éventuellement pour la réaction du magnésium des halogénures $MgX_2$ de celui-ci avec X=Cl, Br, I dans le rapport $Mg:MgX=1:1$.

6